Europäisches Patentamt

European Patent Office

Office européen des brevets

(19)

(11) Publication number: **0 452 815 B1**

# EUROPEAN PATENT SPECIFICATION

(12)

(45) Date of publication of patent specification: **09.11.94**

(51) Int. Cl.⁵: **B60Q  1/44**

(21) Application number: **91105782.6**

(22) Date of filing: **11.04.91**

(54) **Trapped beam hologram center high mounted stoplight.**

(30) Priority: **16.04.90 US 510319**

(43) Date of publication of application:
**23.10.91 Bulletin  91/43**

(45) Publication of the grant of the patent:
**09.11.94 Bulletin  94/45**

(84) Designated Contracting States:
**DE FR GB IT SE**

(56) References cited:
**WO-A-88/05002**

(73) Proprietor: **Hughes Aircraft Company**
**7200 Hughes Terrace**
**P.O. Box 45066**
**Los Angeles, California 90045-0066 (US)**

(72) Inventor: **Smith, Ronald T.**
**16700 Yukon No. 215**
**Torrance, California 90504 (US)**
Inventor: **Daiber, Andrew J.**
**P.O. Box 6323**
**Standford, CA, 94309 (US)**
Inventor: **McDonald, Mark E.**
**121 Rees Street**
**Playa del Rey, California 90293 (US)**
Inventor: **Au, Anson**
**2664 Kelton Avenue**
**Los Angeles, California 90064 (US)**

(74) Representative: **Patentanwälte Grünecker,**
**Kinkeldey, Stockmair & Partner**
**Maximilianstrasse 58**
**D-80538 München (DE)**

EP 0 452 815 B1

# Description

## BACKGROUND OF THE INVENTION

The disclosed invention generally relates to center-high mounted brake lights or stoplights for vehicles, and more particularly is directed to a holographic center high mounted stoplight assembly which includes a volume hologram that is illuminated with playback illumination that is trapped in the vehicle rear window.

Present federal regulations require center high mounted stoplights in automobiles in addition to the traditional stoplights. The high mounted stoplights are intended to maximize the visibility of the stoplights to following drivers.

Center high mounted stoplights have been implemented as a standard red transmitting lenticular lens and an illuminating incandescent bulb enclosed in a housing that is commonly secured adjacent the top or bottom of an automobile rear window (also referred to as an automobile backlight). The bulky housing, which is intended to prevent scattered stoplight illumination from being within the driver's rearward field of view, partially obscures rearward visibility, imposes limitations on design, and is generally unattractive. Although the bulky housing is intended to prevent scattered stoplight illumination from entering the automobile, it is not completely effective, particularly if the backlight is dirty and/or covered with moisture or snow.

In order to avoid the visibility obscuration of the bulb and lens center high mounted stoplight, holographic stoplight systems have been developed wherein holograms secured to the automobile backlight provide stoplight illumination when illuminated with playback illumination. The holograms are substantially transparent to the driver's rearward field of view, and the playback illumination source is outside such field of view, which avoids the obscuration presented by the bulb and lens type stoplight assemblies. Examples of center high mounted holographic stoplight systems are disclosed in commonly assigned US-A-4892 369, filed January 7, 1987, and US-A-4916 593, filed January 4, 1989.

Considerations with known holographic stoplight systems that utilize projected playback illumination include possible blockage by items placed in the rear of the vehicle, the possibility of objectionable reflections off the rear window, and objectionable heat from the light source. A further consideration with a holographic stop-light system that utilizes projected playback illumination is ambient turn-on, including turn-on that diffracts light into the vehicle operator's rearward field of view.

The known holographic stoplight system couples playback illumination through the edge of the hologram, for example by a fiber optic link, as disclosed in commonly assigned U.S. Patent 4,892,369, issued January 9, 1990. A consideration with an edge coupled system is the efficiency of the hologram and the use of a highly collimated, very narrow bandwidth playback illumination such as could be provided by a laser or very bright playback illumination.

A holographic stoplight having the features of the first part of claim 1 is known from WO-A-8 805 002. Hereby the playback illumination propagates via a fiber optic coupling to the hologram.

It is the object of the invention to provide an improved holographic stoplight which is more compact.

This object is solved by a holographic stoplight having the features of claim 1.

## BRIEF DESCRIPTION OF THE DRAWING

The advantages and features of the disclosed invention will readily be appreciated by persons skilled in the art from the following detailed description when read in conjunction with the drawing wherein:

FIG. 1 is a schematic side elevation sectional view depicting a trapped beam holographic stoplight system in accordance with the invention.

FIG. 2 is a schematic side elevation sectional view illustrating the operation of the trapped beam holographic stoplight system of FIG. 1 as embodied with a transmission volume hologram.

FIG. 3 is a schematic side elevation sectional view illustrating the operation of the trapped beam holographic stoplight system of FIG. 1 as embodied with a reflection volume hologram.

FIG. 4 depicts an illustrative example of a playback illumination source for the trapped beam holographic stoplight system of FIG. 1 comprising an array of incandescent lamps.

FIG. 5 depicts an illustrative example of a playback illumination source for the trapped beam holographic stoplight system of FIG. 1 comprising a long, thin filament tube.

FIG. 6 depicts an illustrative example of a playback illumination source for the trapped beam holographic stoplight system of FIG. 1 comprising an incandescent lamp and optical fibers for distributing the light along a thin line.

FIG. 7 illustrates a trapped beam holographic stoplight system in accordance with the invention wherein the trapped playback beam passes through the volume hologram several times.

FIG. 8 schematically illustrates a further embodiment a trapped beam holographic stoplight system in accordance with the invention utilizing an illumination source above the vehicle rear window and optical guides for coupling illumination source to a coupling prism which in turn couples the illumination into a substrate that supports a stoplight hologram.

FIG. 9 illustrates an exposure setup for recording a hologram for the disclosed trapped beam holographic stoplight system.

FIG. 10 illustrates a further exposure set up for recording a hologram for the disclosed trapped beam holographic stoplight system.

FIG. 11 illustrates an exposure setup for recording a reflection rainbow hologram for the disclosed trapped beam holographic stoplight system.

## DETAILED DESCRIPTION OF THE DISCLOSURE

In the following detailed description and in the several figures of the drawing, like elements are identified with like reference numerals.

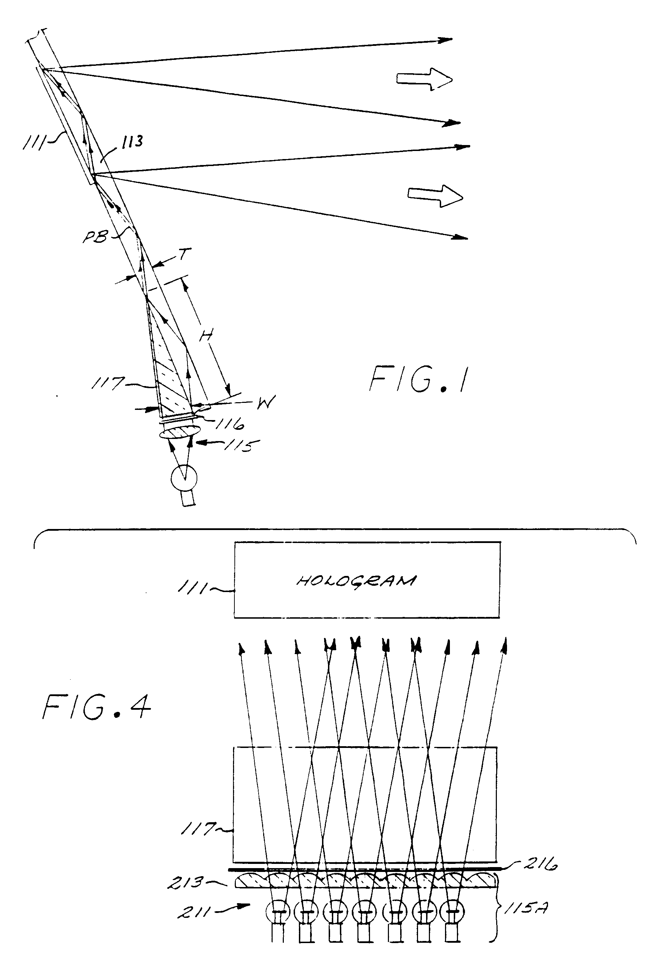

Referring now to FIG. 1, schematically shown therein is a side elevational view of a trapped beam holographic stoplight system which includes a hologram structure 111 that is secured to the inside surface of the rear window 113 of a vehicle. The hologram structure 111, which can comprise a transmission hologram or a reflection hologram, produces stoplight illumination in response to playback illumination PB which propagates to the hologram structure 111 via substantially total internal reflections within the rear window 113.

Playback illumination is provided by a light source 115 and a filter 116 that provides the appropriate range of wavelengths. The light source 115 is connected to the brake light actuating circuit of the vehicle so as to be energized when the brake pedal is depressed. The filter 116 can be a high pass filter or a narrow band filter, depending upon stoplight image sharpness requirements, which in combination with the light source 115 provide the appropriate luminous intensity spectral bandwidth to comply with the federal stoplight specifications.

By way of particular example, for a hologram where the hologram image is focussed in the hologram plane, a high pass filter having a cutoff wavelength of about 600 nanometers (nm) would produce an image that will be perceived as red, with the apparent peak luminous intensity being somewhere between about 600 nm and 620 nm. For holograms wherein the hologram image is focussed away from the hologram plane and certain image sharpness requirements exist, the luminous spectral bandwidth may need to be reduced below that which occurs with a high pass filter, and a narrow bandpass filter would be utilized.

The output of the filter 116 is coupled into the lower portion of the rear window 113 by a prism 117 which is laterally coextensive (i.e., in the horizontal direction as oriented in a vehicle) with the hologram structure 111. Illustrative examples of the light source 115, schematically depicted in FIG. 1 as a bulb and a focusing lens, will be discussed further below.

The angle of the playback beam as it enters the rear window, the width W of the playback beam coupled into the rear window, and the height H of the prism are selected as appropriate relative to the thickness T of the rear window so that the internally reflected light will not be incident upon the prism/window interface. For the stoplight shown in FIG. 1 wherein the entire beam is utilized to illuminate the entire surface of the hologram structure 111, the foregoing parameters also define the location of the hologram structure, as well as its maximum vertical dimension. In particular, the hologram structure can be located at a distance D from the top edge of the prism 117:

$$D = m^*S \qquad \text{(Equation 1)}$$

where m is an integer, and S is the distance between (a) the entry point of a ray into the rear window and (b) the point where the ray first strikes the entry surface after a first internal reflection; i.e., the distance from entry point to the point of the second internal reflection. Such distance S can be expressed as follows:

$$S = (2T)/(\tan \theta) \qquad \text{(Equation 2)}$$

where T is the thickness of the rear window and $\theta$ is the acute angle between the ray entering the rear window and the incident surface of the rear window.

The maximum vertical dimension for the hologram would be S since the entire hologram is illuminated by the entire internally reflected playback beam.

While the illustrative example of FIG. 1 shows the playback illumination as being coupled at the lower portion of the vehicle rear window, it should be appreciated that the playback illumination can alternatively be coupled at the top portion of the rear window with the light source being above the rear window, as will be described further herein.

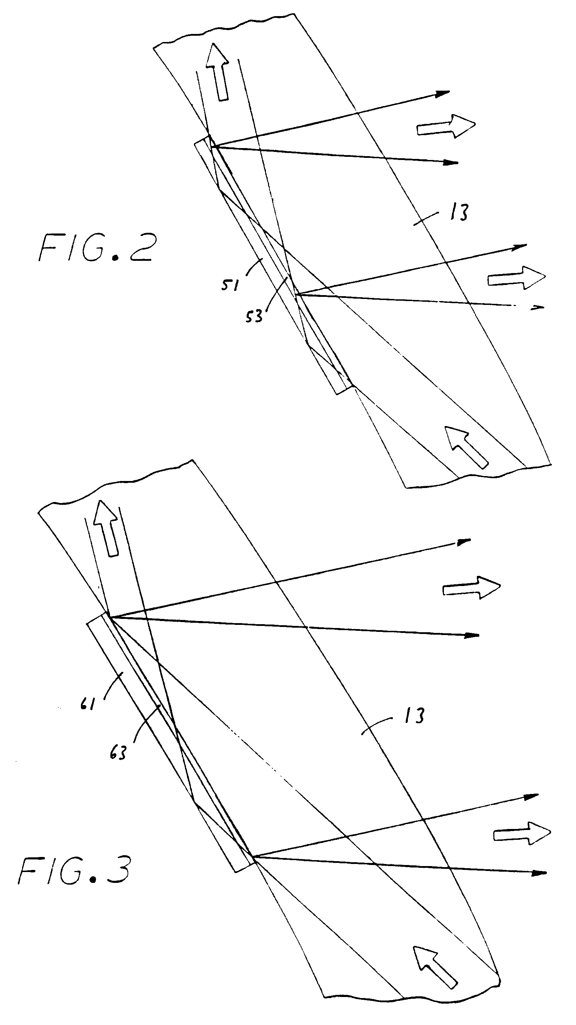

Referring now to FIG. 2, shown therein is a detail view of an illustrative example of the hologram 111 embodied as a transmission volume hologram 51 laminated with a support substrate 53. The laminar structure is secured to the inside surface of the rear window 13 with the transmission hologram against the window surface. In operation, the playback illumination that is incident on the hologram 51 by internal reflection in the rear window is not at the appropriate angle for diffraction, and therefore passes through to the substrate 53. The playback illumination that reaches the substrate 53 is totally internally reflected at the inside air/substrate interface, and is incident on the hologram 51 at an angle that is appropriate for diffraction, which produces stoplight illumination.

Referring now to FIG. 3, shown therein is a detail view of an illustrative example of the hologram 111 embodied as a reflection volume hologram 61 laminated with a supporting substrate 63. The laminar structure is secured to the inside surface of the rear window 13 with the reflection hologram against the window surface. In operation, the playback illumination is incident on the reflection hologram at an angle appropriate for diffraction, which produces stoplight illumination.

The appropriate characteristics of the light source 115 are based on the playback characteristics of the volume hologram 111. In particular, since the playback illumination propagates by internal reflection, the angle between the incident and diffracted illumination of the hologram is necessarily large. As is well known relative to volume holograms, angular bandwidth decreases as the angle between incident illumination and diffracted illumination increases. As a result, the hologram will diffract with relatively high efficiency only for a vary narrow range of incidence angles within the plane of incidence that is defined by the normal to the hologram structure 111 and the central axis of the construction reference beam. By way of particular example, such plane of incidence can be selected to be parallel to the plane of FIG. 1.

In view of the efficiency considerations, it is preferable that the playback illumination incident on the hologram 111 be well collimated parallel to the plane of incidence. Since hologram diffraction efficiency is much less sensitive to changes in incidence angle in the direction perpendicular to the place of incidence, the playback illumination incident on the hologram can be relatively uncollimated in that direction, and yet be strongly diffracted by the hologram. Decollimation in the direction perpendicular to the plane of incidence results in a blurring of the diffracted beam in the horizontal direction, which would have minimal objectionable effect for the field of view for a stoplight.

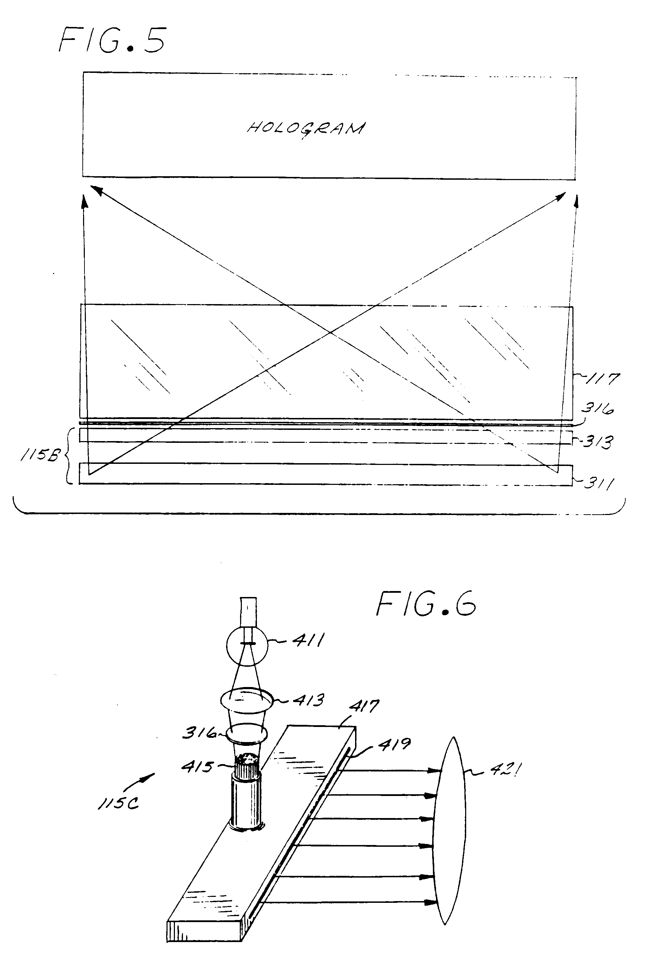

Referring now to FIG. 4, shown therein is a light source 115A which provides playback illumination that is substantially collimated parallel to the plane of incidence for the hologram structure 111. In particular, the light source 115A includes a row of incandescent bulbs 211 having respective filaments that are long and very thin, with the long dimensions of the filaments being substantially parallel to lower edge of the rear window portion closest to the bulbs. Illumination from the row of incandescent bulbs 211 is focused by an appropriate lens structure 213, such as a fly's eye spherical lens array configured to include a spherical lens for each bulb. Alternatively, the lens structure 213 can comprise a cylindrical lens laminated to a cylindrical lens array having its lenses rotated 90 degrees relative to the cylindrical lens. The illumination provided by the lens structure 213 is filtered by a filter 216 having characteristics as described above relative to the filter 116 of the structure of FIG. 1.

Referring now to FIG. 5, shown therein is a further light source 115B that provides playback illumination that is substantially collimated parallel to the plane of incidence for the hologram 111. The light source 115B includes an elongated thin filament tube 311 which is substantially parallel to the lower edge of the rear window portion that is closest thereto. Illumination from the row of filament tube 311 is focused by an appropriate lens 313, for example a cylindrical lens. The illumination provided by the lens 313 is filtered by a filter 316 having characteristics as described above relative to the filter 116 of the structure of FIG. 1.

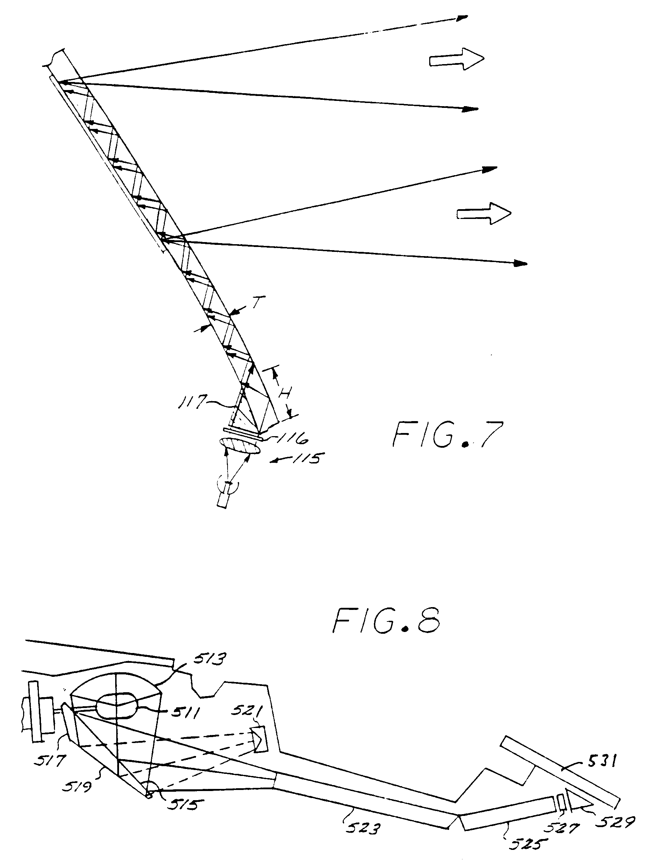

Referring now to FIG. 6, shown therein yet another light source 115C that provides playback illumination that is substantially collimated parallel to the plane of incidence for the hologram 111. The light source 115C includes an incandescent bulb 411 and a lens 413 for focusing illumination from the bulb 411 into a fiber optic bundle 415 whose fibers are arranged in a housing 417 to provide a long an narrow output section 419. The output illumination from the fiber optic output section 419 is focused by an appropriate lens 421, for example a fly's eye spherical lens array, a cylindrical lens, or a cylindrical lens laminated to a cylindrical lens array as discussed above. The illumination provided by the lens 413 is filtered by a filter 416 having characteristics as described above relative to the filter 116 of the structure of FIG. 1.

The use of an input coupling prism allows greater design flexibility, a wider beam, and more efficient coupling of playback illumination as compared to edge coupling. In particular, edge coupling would require a very narrow beam and would not permit relatively smaller (relative to normal) beam angles.

It is noted that coupling the playback illumination into the rear window at a relatively high incidence angle relative to normal (e.g., greater than 61 degrees) provides the advantage of maintaining total internal reflection in the presence of water or ice on the rear window. Maintaining total internal reflection in the presence of dust or dirt can also be achieved with a pyrolytic silicon dioxide layer applied to the outside surface of the rear window for use with a beam angle of about 73 degrees or greater.

Referring now to FIG. 7, shown therein is a trapped beam holographic stoplight wherein the hologram is illuminated by multiple reflections of the playback beam. In other words, the hologram is illuminated in horizontal stripes, with each stripe corresponding to a respective internal reflection. Since the multiple bounce implementation of FIG. 7 relies on the playback illumination that is not diffracted on a prior pass at the hologram, which is due to hologram inefficiency, the playback illumination is more efficiently utilized.

The angle of the playback beam as it enters the rear window, the width of the playback beam W, and the height H of the prism are selected as appropriate relative to the thickness T of the rear window so that the internally reflected light will not be incident upon the prism/window interface, and so that the illumination stripes on the hologram are reasonably contiguous and not necessarily overlapping. For the the multiple reflection illumination of the hologram structure 111, the hologram structure 111 would be positioned at any of the distances D defined by Equation 1 discussed above relative to the single pass illumination system, but can have a vertical dimension that is an integral multiple of the distance S also described above relative to Equation 2. In practice, the foregoing requirements can be somewhat relaxed since the filaments of practical light sources are not true point sources, and thus completely collimated illumination is not provided.

Referring now to FIG. 8, set forth therein is a side elevation view of a further embodiment of the invention which utilizes an overhead illumination source; i.e., an illumination source located above the rear window of the vehicle. The output of a halogen bulb 511 is reflected by a para-elliptical reflector 513 to a cold mirror 515 disposed on the top surface of a glass wedge substrate 517. A heat reflecting metallic coating 519 is disposed on the bottom surface of the glass wedge substrate which is angled to reflect heat to a heat sink 521.

The para-elliptical reflector 513 and the cold mirror 515 are configured so that the illumination reflected by the cold mirror 515 converges to a line focus at the entrance of a first acrylic light guide 523. At the entrance of the light guide 523, the width of the illumination beam normal to the plane of the figure should be at least as wide as the stoplight hologram 111, and the light guide 523 is accordingly dimensioned. The light exiting from the first light guide 523 is directed to the entrance of a second acrylic light guide 524. In particular, the exit surface of the first light guide and the entrance surface of the second light guide are prism surfaces at appropriate angles so that refractions of the illumination being coupled from the first light guide to the second light guide is properly directed within the second light guide. Essentially, the prism surfaces function to bend the illumination beam with minimal fanning.

A high pass or narrow band pass filter 527 is disposed at the exit of the second light guide 525, and the output of the filter 527 is coupled by a prism 529 to a laminate structure 531 that includes the stoplight hologram structure 111. By way of particular example, the laminate structure can comprise first and second water white glass layers with the hologram structure supported therebetween. The laminate structure would be inserted into an appropriately shaped notch formed in the top part of the rear window.

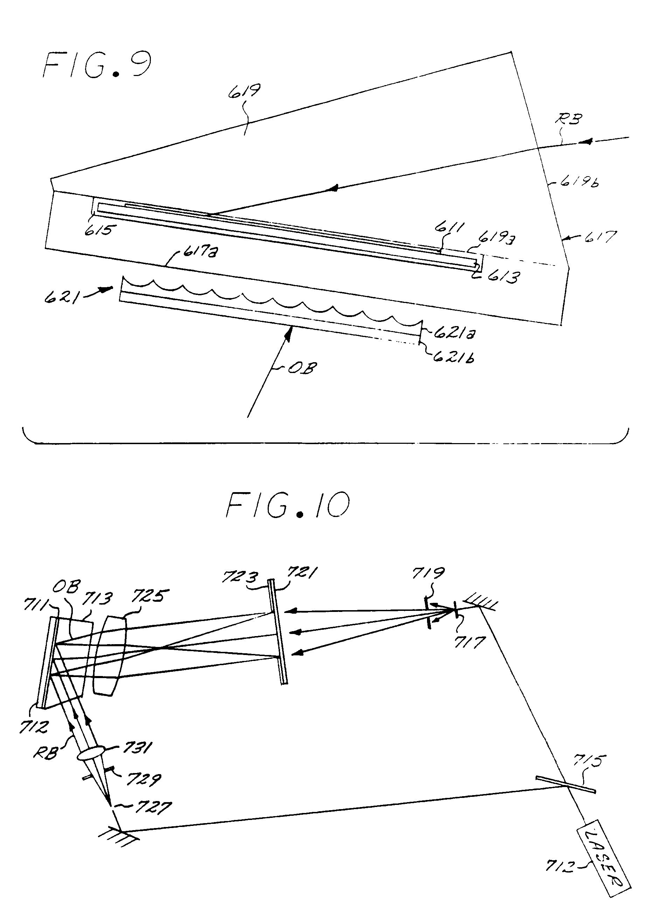

Referring now to FIG. 9, shown therein is to view of an illustrative example of an exposure setup that can be utilized to record the stoplight hologram structure 111 in accordance with the invention.

A hologram recording plate including a holographic recording layer 611 and a transparent supporting substrate 613 is supported in the opening 615 of an oil gate trough 617 which is filled with index matching fluid. By way of illustrative examples, the holographic recording layer comprises dichromated gelatin or a photopolymer compound. One side of the opening comprises one face of 619a of a wedge prism 619, and the recording layer is supported parallel to such prism face. The wedge prism 619 further includes a face 619b that forms an acute angle relative to the face 619a.

The oil gate trough 617 also includes an outside surface 417a that is parallel to the wedge prism face 619a that forms one side of the oil gate trough opening 615.

The exposure set up further includes a lenticular lens array 623 that is parallel to the oil gate trough surface 617a, and is spaced therefrom by an air gap. By way of illustrative example, the lenticular lens array 623 includes a positive plano-concave cylindrical lens array 623a that is laminated with a negative plano-convex cylindrical lens array 623b with their longitudinal axes at 90 degrees to each other. The plano-concave cylindrical lens array 623a is for dispersing light in the vertical direction, while the plano-convex cylindrical lens array is for dispersing light in the horizontal direction.

It should be appreciated that other configurations of cylindrical lens arrays having orthogonally oriented longitudinal axes can be utilized for the lenticular lens array 623. For example, both cylindrical lens arrays can be positive, or both can be negative. Also, the cylindrical lens arrays can be separated by an air gap, in which case appropriate anti-reflection coatings would be utilized.

Respective collimated beams are utilized for producing a reference beam RB and an object beam OB. Preferably, such beams originate from the same laser source whose output is split by a beamsplitter. The beamsplitter outputs are made to diverge by respective diverging optics, such as an objective lens and a pinhole diaphragm. The respective diverging beams are then collimated by respective collimating optical elements.

The collimated beam for the reference beam is coupled to the recording medium via the prism face 619b at angle that is appropriate for the intended playback geometry, which will typically be large as measured relative to normal.

The collimated beam for the object beam is directed to the lenticular lens array 621 at an angle based on the required directionality of the diffracted playback illumination, with appropriate regard for the angular orientation of the rear window on which the hologram will be mounted.

Referring now to FIG. 10, schematically depicted therein is a side view of a further exposure setup for recording a transmission volume hologram of the hologram structure 111, with hologram recording film having the same orientation as the installed orientation of the resulting volume hologram as shown in FIG. 1. A hologram recording film 711, dichromated gelatin, for example, supported by a glass substrate 712, is exposed to an object beam OB and a reference beam RB which are coupled to the film 711 by a prism 713. The incidence angles of the reference and object beams on the hologram recording film are defined by the desired playback geometry and the relationship between the recording wavelengths and the playback wavelengths.

The object and reference beams preferably originate from the same laser source 712 whose output is split by a beam splitter 715 to provide respective laser outputs for the object beam is made to diverge by diverging optics 717, for example, a microscope objective lens and a pinhole diaphragm. Diverging illumination provided by the diverging optics 717 passes through an iris 719 to a diffusion screen 721 which includes a mask 723 on its output side. The masked output of the diffusion screen 721 is focused by a lens 725 whose output is directed to the prism 713.

The laser output for the reference beam RB is made to diverge by diverging optics 727, for example, a microscope objective lens and a pinhole diaphragm. Diverging illumination provided by the diverging optics passes through an iris 729 to a collimating lens 731 whose output is directed to the prism 713.

The hologram structure 111 can also comprise a rainbow hologram that creates a real image floating behind the rear window and viewable by the driver of a following car. The rainbow hologram would diffract incident light of any one wavelength into a vertically very narrow horizontally wide focused "slit" located at the eyebox. Thus, with a broadband source such as an incandescent lamp, and without a band limiting filter, each wavelength creates a slit exit pupil located at a different height from those of other wavelengths. The rainbow hologram would be designed so that the range of wavelengths acceptable for stoplights will be viewed over the required vertical angle. The slit exit pupil position would be designed to be located in the most likely position for the driver of a following car. The image would gradually blur with displacement forward or behind such position since the observer would no longer be looking through a narrow slit exit pupil for each color.

In order to meet the stoplight color requirements, a highpass filter 116 would be utilized as described above relative to the non-rainbow holograms. However, the rainbow hologram would provide an image of desired sharpness to be located away from the plane of the hologram.

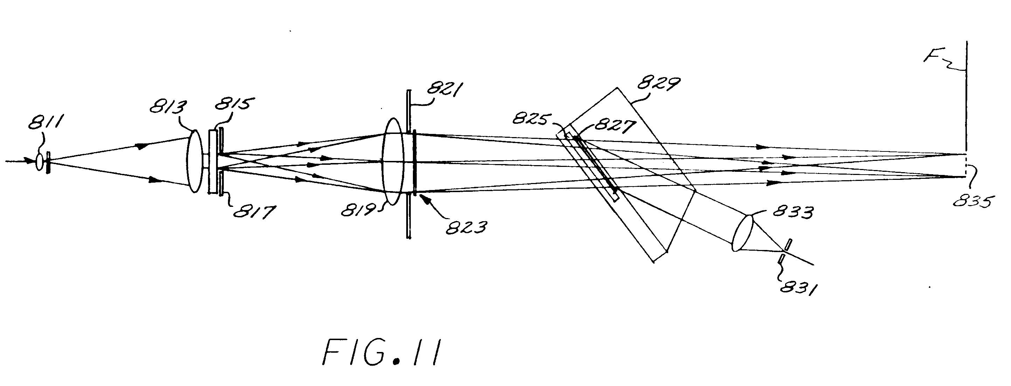

Referring now to FIG. 11, set forth therein is an exposure setup for making a rainbow hologram for the hologram structure 111. A collimated beam, for example, from a laser, passes through a spatial filter 811 to a focusing lens 813. The output of the focusing lens 813 is incident upon a high gain screen 815. The output of the high gain screen 815 is masked by a mask 817 having a slit aperture formed therein. The illuminated slit mask is imaged by a lens 819 to produce a real image 835 at a plane F. The output of the lens 819 passes through a mask 821 and an image reticle 821, which by way of example can be a transparency having a stoplight image to be recorded in the hologram. The image output of the image reticle passes through a glass substrate 825 that supports a recording medium layer 827, dichromated gelatin, for example.

The recording medium layer 827 is positioned parallel to a face of a block prism 829, and is separated therefrom by refractive index matching oil, for example, in an oil gate trough as described previously relative to the exposure set up of FIG. 9. The reference beam is coupled to the recording medium via a face of the block prism that configured so that the reference beam is incident on the recording medium at an angle determined by the desired playback angle.

The reference beam is formed by passing a collimated beam through a spatial filter 831 whose output is collimated by a collimating lens 833.

The foregoing has been a disclosure of a holographic stoplight system that advantageously utilizes playback illumination that is prism coupled into the rear vehicle window for propogation by internal reflection, which avoids the space usage limitations imposed by projected illumination and also permits a greater amount of playback illumination than edge lit systems. Further, the disclosed holographic stoplight system is less susceptible to ambient turn-on that a projected playback system.

Although the foregoing has been a description and illustration of specific embodiments of the invention, various modifications and changes thereto can be made by persons skilled in the art without departing from the scope and spirit of the invention as defined by the following claims.

**Claims**

1. A holographic stoplight for a vehicle having a rear window (113), comprising:
   illumination means (115) for providing a playback illumination;
   optical coupling means (117); and
   a hologram (111) arranged on a surface of the rear window (113) for diffracting the playback illumination to produce a holographic stoplight image that is visible from behind the vehicle,
   **characterized in that**
   said optical coupling means (117) couples said playback illumination into the rear window (113) for propagation therein to said hologram (111) by total internal reflection.

2. The holographic stoplight of claim 1, wherein said optical coupling means (111) comprises a wedge-shaped prism.

3. The holographic stoplight of claim 1 or 2, wherein said hologram (111) comprises a reflection hologram.

4. The holographic stoplight of claim 1 or 2, wherein said hologram (111) comprises a transmission hologram.

5. The holographic stoplight of claim 1 or 2, wherein said hologram (111) comprises a rainbow hologram.

6. The holographic stoplight according to one of claims 1 to 5, wherein said illumination means (115) includes an acrylic light guide.

7. The holographic stoplight according to one of claims 1 to 6, wherein said optical coupling means (117) and said hologram (111) are configured to substantially fully illuminate said hologram (111) with a single pass of the internally reflected playback illumination.

8. The holographic stoplight according to one of claims 1 to 6, wherein said optical coupling means (117) and said hologram (111) are configured to substantially fully illuminate said hologram (111) with a plurality of passes of the internally reflected playback illumination.

**Patentansprüche**

1. Ein holographisches Stopplicht für ein Fahrzeug mit einem Rückfenster (113) mit Beleuchtungsmitteln (115) zum Erzeugen einer Hintergrundsbeleuchtung, optischen Kopplungsmitteln (117) und einem Hologramm (111), welches auf der Oberfläche des Rückfensters (113) zum Ablenken der Hintergrundbeleuchtung angeordnet ist, um ein holographisches Stopplichtbild zu erzeugen, das von hinten zu sehen ist, **dadurch gekennzeichnet, daß** die optischen Kopplungsmittel (117) die Hintergrundbeleuchtung in das Rückfenster (113) koppeln, damit sie darin mittels totaler innerer Reflexion zu dem Hologramm 111 fortschreitet.

2. Holographisches Stopplicht nach Anspruch 1, **dadurch gekennzeichnet**, daß die optischen Kopplungsmittel (111) ein keilförmiges Prisma enthalten.

3. Holographisches Stopplicht nach Anspruch 1 oder 2, **dadurch gekennzeichnet**, daß das Hologramm (111) ein Reflexionshologramm enthält.

4. Holographisches Stopplicht nach Anspruch 1 oder 2, **dadurch gekennzeichnet**, daß das Hologramm (111) ein Transmissionshologramm enthält.

5. Holographisches Stopplicht nach Anspruch 1 oder 2, **dadurch gekennzeichnet**, daß das Hologramm (111) ein Regenbogenhologramm enthält.

6. Holographisches Stopplicht nach einem der Ansprüche 1 bis 5, **dadurch gekennzeichnet**, daß die Beleuchtungsmittel (115) einen Acryllichtleiter aufweisen.

7. Holographisches Stopplicht nach einem der Ansprüche 1 bis 6, **dadurch gekennzeichnet**, daß die optischen Kopplungsmittel (117) und das Hologramm (111) derart ausgebildet sind, daß das Hologramm (111) im wesentlichen mit einem einzigen Durchgang der innen reflektierten Hintergrundbeleuchtung voll beleuchtet wird.

8. Holographisches Stopplicht nach einem der Ansprüche 1 bis 6, **dadurch gekennzeichnet**, daß das optische Kopplungsmittel (117) und das Hologramm (111) derart ausgebildet sind, daß das Hologramm (111) im wesentlichen mit einer Vielzahl von Durchgängen der innen reflektierten Hintergrundbeleuchtung voll beleuchtet wird.

**Revendications**

1. Feu de frein holographique pour un véhicule ayant une lunette arrière (113), comportant :

   des moyens d'illumination (115) destinés à produire une illumination d'affichage ;

   des moyens (117) de couplage optique ; et

   un hologramme (111) agencé sur une surface de la lunette arrière (113) pour diffracter l'illumination d'affichage afin de produire une image holographique de feu de frein qui est visible de derrière le véhicule,

   caractérisé en ce que

   lesdits moyens (117) de couplage optique introduisent par couplage ladite illumination d'affichage dans la lunette arrière (113) pour qu'elle s'y propage jusqu'audit hologramme (111) par réflexion interne totale.

2. Feu de frein holographique selon la revendication 1, dans lequel lesdits moyens (117) de couplage optique comprennent un prisme en forme de coin.

3. Feu de frein holographique selon la revendication 1 ou 2, dans lequel ledit hologramme (111) comprend un hologramme à réflexion.

4. Feu de frein holographique selon la revendication 1 ou 2, dans lequel ledit hologramme (111) comprend un hologramme à transmission.

5. Feu de frein holographique selon la revendication 1 ou 2, dans lequel ledit hologramme (111) comprend un hologramme à arc en ciel.

6. Feu de frein holographique selon l'une des revendications 1 à 5, dans lequel lesdits moyens d'illumination (115) comprennent un guide acrylique de lumière.

7. Feu de frein holographique selon l'une des revendications 1 à 6, dans lequel lesdits moyens (117) de couplage optique et ledit hologramme (111) sont configurés pour illuminer à peu près totalement ledit hologramme (111) avec une seule passe de l'illumination d'affichage en réflexion interne.

8. Feu de frein holographique selon l'une des revendications 1 à 6, dans lequel lesdits moyens (117) de couplage optique et ledit hologramme (111) sont configurés pour illuminer à peu près totalement ledit hologramme (111) en plusieurs passes de l'illumination d'affichage en réflexion interne.

FIG.1

HOLOGRAM

FIG.4

FIG.2

FIG.3

FIG.5

HOLOGRAM

~117

316

~313

115B {

~311

FIG.6

~411

~413

417

316~

419

415~

~421

115C

FIG.7

FIG.8

FIG.9

FIG.10

FIG. II